# FASCICULE DE BREVET EUROPEEN

(11) **EP 1 593 817 B1**
(45) Date de publication et mention de la délivrance du brevet: **18.10.2006**
(21) Numéro de dépôt: 05290783.9
(22) Date de dépôt: 08.04.2005
(51) Int. Cl.: F01D 21/04

(54) **Turbomachine dotée d'un système de protection d'arbre principal de moteur à palier fusible**
Turbomaschine mit einem System zum Schutz der Haupttriebwerkswelle mit Lager-Sollbruchstelle
Turbomachine provided with a protection system for the main engine shaft with frangible bearing

(30) Priorité: 14.04.2004 FR 0403911
(43) Date de publication de la demande: 09.11.2005
(73) Titulaire: SNECMA, 75015 Paris (FR)
(72) Inventeur: Bourget, Sébastien, 77220 Tournant en Brie (FR); Dambrine, Bruno, 77820 Le Châtelet en Brie (FR); Mons, Claude, 77176 Savigny le Temple (FR); Soupizon, Jean-Luc, 77000 Vaux le Penil (FR)
(74) Mandataire: Barbin le Bourhis, Joël

(56) Documents cités:
- FR-A- 2 773 586

## Description

L'invention concerne une turbomachine qui comprend au moins un premier ensemble rotatif avec un premier arbre, un stator et un palier dit "fusible", solidaire du stator, pouvant supporter ledit arbre et susceptible de céder lorsqu'un balourd apparaît sur le premier ensemble rotatif. Cette turbomachine est destinée principalement à être utilisée dans le domaine de l'aviation, et plus particulièrement en tant que moteur d'avion.

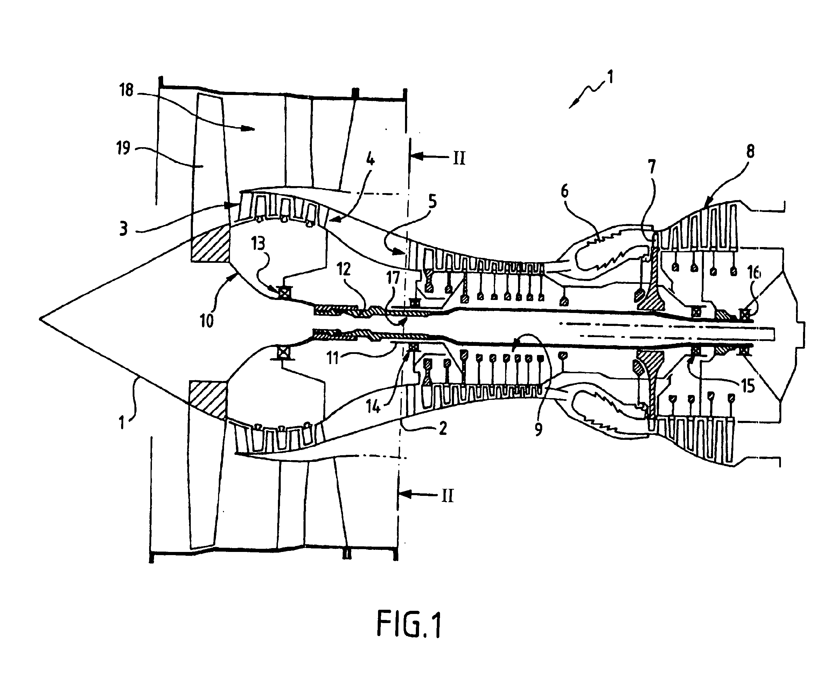

Un exemple de ce type de turbomachine est illustré sur la figure 1 qui représente un turboréacteur 1 d'avion de type bien connu. Ce turboréacteur 1 comprend un premier 9 et un deuxième ensemble rotatif 10 entourés par un stator 2, et séparés de ce dernier par une veine principale 3 de section annulaire. La veine principale 3 est occupée par des étages d'aubes alternativement solidaires desdits ensembles rotatifs 9 et 10 et du stator 2 pour accélérer et comprimer les gaz avant de bénéficier de l'énergie qu'ils libèrent en se détendant, après la combustion du carburant : on trouve ainsi d'avant en arrière, les aubes d'un compresseur à basse pression 4, les aubes d'un compresseur à haute pression 5, une chambre de combustion 6, les aubes d'une turbine à haute pression 7 et les aubes d'une turbine à basse pression 8. Le premier ensemble rotatif 10 comprend le rotor du compresseur à basse pression 4, le rotor de la turbine à basse pression 8, et un premier arbre 12 également appelé arbre à basse pression ou arbre principal, assurant la liaison entre les deux rotors précités. Le deuxième ensemble rotatif 9 comprend le rotor du compresseur à haute pression 5, le rotor de turbine à haute pression 7 et un deuxième arbre 11, également appelé arbre à haute pression, assurant la liaison entre les deux rotors précités. Le turboréacteur 1 comprenant deux ensembles rotatifs 9 et 10, ou corps, on parle généralement de turboréacteurs double corps.

Les premier et deuxième arbres 12 et 11 sont concentriques et tournent à des vitesses différentes, la vitesse de rotation du premier arbre 12 étant inférieure à celle du deuxième arbre 11. Les deux arbres sont soutenus à l'aide de paliers liés au stator 2 : on trouve d'avant en arrière un palier avant 13 pour le premier arbre 12, un palier avant 14 pour le deuxième arbre 11, un palier arrière 15 pour le deuxième arbre 11 et un palier arrière 16 pour le premier arbre 12. Ces paliers comprennent comme élément actif un ou deux roulements à billes ou à rouleaux qui permettent aux arbres 11 et 12 de tourner à grande vitesse indépendamment l'un de l'autre ; les arbres 11 et 12 sont donc entièrement séparés l'un de l'autre et mécaniquement indépendants. Toutefois, on remarque qu'ils ne sont séparés que par un petit jeu sur une zone de proximité 17 assez longue, située sensiblement au droit du palier avant 14 du deuxième arbre 11.

Les turboréacteurs d'avion modernes ont un taux de compression élevé et un grand taux de dilution des gaz de combustion. Aussi, ils sont munis d'une veine auxiliaire 18 entourant la veine principale 3, parcourue par de l'air qui se mêle au gaz de combustion à l'arrière de la turbine à basse pression 8 (on parle ainsi de turboréacteurs double flux). L'air qui parcourt cette veine auxiliaire 18 est accéléré par les aubes d'une soufflante 19 solidaire du premier élément rotatif 10 et qui s'étend en avant du compresseur à basse pression 4. Les aubes de la soufflante 18 ont un très grand diamètre et une inertie conséquente. Elles sont en outre exposées à la rupture lorsque l'avion est en vol et qu'un corps étranger, comme un oiseau, entre par accident au contact de ces dernières.

Dès qu'une aube de soufflante est rompue, un balourd important apparaît sur le premier élément rotatif 10, ce qui produit sur lui de très importants efforts de nature vibratoire qui sont transmis au deuxième élément rotatif 9 et au stator 2 par l'intermédiaire du palier avant 13. Les dommages produits par ces efforts excessifs sont susceptibles de se propager dans tout le turboréacteur 1. C'est pourquoi il est connu d'avoir recours à un palier avant 13 dit "fusible", c'est-à-dire susceptible de se casser ou de céder d'une autre manière lorsqu'un balourd apparaît sur le premier élément rotatif 10. Ce type de palier 13 comprend en général une amorce de rupture à proximité du premier arbre 12, il s'agit en général d'une portion de structure qui le lie au stator 2 de faible épaisseur ou de boulons de liaison de petit diamètre et dont la tige filetée peut être entaillée ; un exemple de ce type de palier est décrit dans le brevet US 5,417,501. L'amorce de rupture est calculée pour se déchirer ou se rompre quand le balourd apparaît, de sorte que le palier avant 13 se détache du stator 2 et cesse de soutenir le premier arbre 12 qui devient alors libre d'osciller en basculant autour du palier arrière 16 sans plus produire d'efforts excessifs sur le stator 2. Le pilote d'avion face à un problème de ce genre arrête généralement le turboréacteur concerné (c'est-à-dire stoppe la combustion de carburant) ce qui permet de ne plus entraîner les arbres 11 et 12 en rotation. Alors, la vitesse de rotation des arbres 11 et 12 décroît et le deuxième arbre 11 s'arrête progressivement de tourner. L'avion continuant son vol, la soufflante 19 entraînée par l'air qui la traverse continue de tourner lentement (par rapport à sa vitesse normale) et entraîne le premier arbre 12 en rotation ; on parle d'auto-rotation du premier ensemble rotatif 10 et de l'arbre 12.

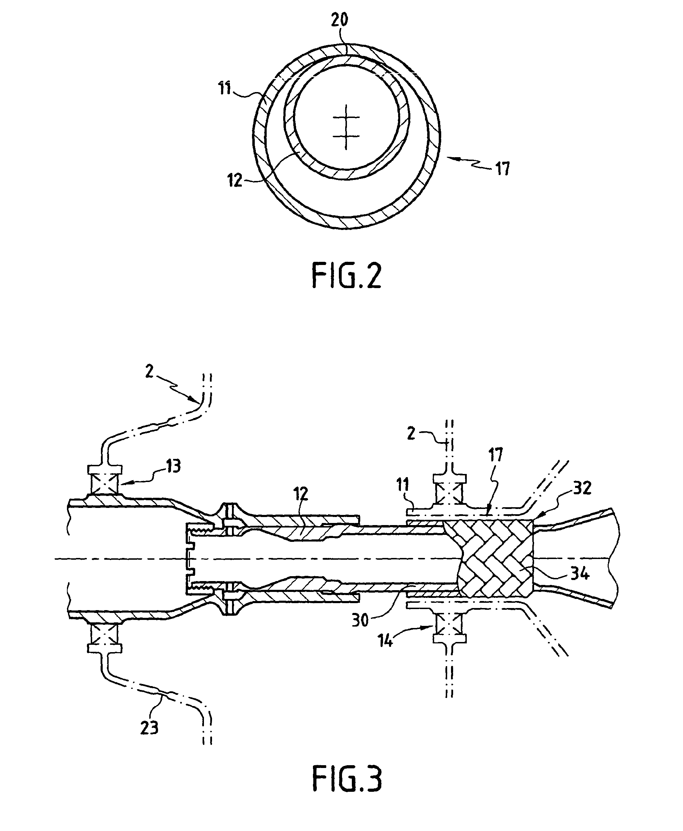

Des dommages considérables peuvent apparaître entre le moment où le palier avant 13 cède et celui ou le premier arbre 12 tourne à faible vitesse en auto-rotation, c'est-à-dire lorsque les arbres 11 et 12 tournent encore à grande vitesse et se touchent dans la zone de proximité 17, comme le montre la figure 2, à cause du basculement du premier arbre 12 autour du palier arrière 16. Lors de ce contact entre arbres, un échauffement considérable est produit par le frottement qui résulte des vitesses de rotation à la fois très différentes et très élevées (par exemple 4 500 tr/min et 17 000 tr/min) de ces deux arbres 11 et 12. La dissipation de chaleur concentrée sur une zone de contact 20 limitée, sur la circonférence du premier arbre 12, est telle que cet arbre 12 est endommagé à cet endroit et passe à un état métallurgique où il est moins résistant, voire susceptible de se rompre. On connaît alors le risque de perdre la soufflante 19 suite à la rupture du premier arbre 12. De plus, comme le contact entre arbres endommage également le deuxième arbre, on est obligé de remplacer les deux arbres 11 et 12 lors de la réparation.

Pour éviter ces inconvénients, une solution connue, décrite dans le document FR 2 773 586, cherche à égaliser rapidement les vitesses de rotation des deux arbres 11 et 12 de manière à limiter les frottements, et donc l'échauffement. Cette solution consiste à recouvrir dans la zone de proximité 17 le premier arbre 12 qui tourne à plus petite vitesse que le deuxième 11, d'un revêtement présentant des capacités d'usinage par meulage ou équivalent et une faible conductivité thermique. Un tel revêtement consistant en une couche de zircone, de zircone yttriée, d'alumine, de borure ou de carbure.

Cependant, malgré la faible conductivité thermique du revêtement, on constate que la capacité d'usinage par meulage de ce dernier entraîne un échauffement important (on dépasse souvent les 1 000°C) qui altère les propriétés des deux arbres 11 et 12 de sorte que le risque de rupture du premier arbre 12 et toutes les conséquences dramatiques d'une telle rupture ne sont pas suffisamment écartés.

La présente invention cherche à mieux protéger le premier arbre et à éviter tout risque de rupture de ce dernier.

Pour atteindre ce but, l'invention a pour objet une turbomachine comprenant au moins un premier ensemble rotatif avec un premier arbre, un stator et des paliers solidaires du stator pouvant supporter ledit arbre, un desdits paliers étant susceptible de céder lorsqu'un balourd apparaît sur l'ensemble rotatif, caractérisée en ce qu'au moins un tronçon dudit arbre est recouvert par un revêtement qui comprend au moins une pièce de tissu imprégnée de résine et qui est destiné à venir au contact d'une partie environnante de la turbomachine lorsque ledit balourd apparaît.

Le nouveau type de revêtement utilisé pour protéger le premier arbre permet de limiter les frottements, et donc l'échauffement, entre cet arbre et ladite partie environnante de la turbomachine.

Avant d'insister sur les avantages de la turbomachine de l'invention, il convient de noter que cette dernière peut comprendre un ou plusieurs ensembles rotatifs. Ainsi, lorsque la turbomachine comprend un unique ensemble rotatif, la partie environnante de la turbomachine au contact de laquelle cet ensemble va venir en cas de rupture d'une pale de soufflante, appartient au stator. Par contre, lorsque la turbomachine comprend plusieurs ensembles rotatifs, ladite partie environnante peut appartenir au stator ou à l'un de ces ensembles rotatifs.

Avantageusement, la turbomachine de l'invention est un moteur d'avion, et plus particulièrement un turboréacteur. D'après la remarque précédente, on comprend que ce turboréacteur peut être monocorps, double corps ou triple corps. Dans le cas particulier d'un turboréacteur double corps, analogue à celui représenté sur la figure 1, la turbomachine comprend un deuxième ensemble rotatif avec un deuxième arbre, les premier et deuxième arbres concentriques étant susceptibles de tourner à des vitesses différentes et le premier arbre tournant moins vite que le second. Dans ce type de turbomachine, ladite partie environnante appartient de préférence au deuxième arbre.

L'invention se caractérise par la nature du revêtement disposé autour du tronçon du premier arbre. Comme indiqué plus haut, ce revêtement composite comprend une pièce de tissu imprégnée de résine. L'utilisation d'un tel revêtement permet d'une part, de protéger ledit tronçon d'arbre en lui évitant d'être en contact direct avec ladite partie environnante et, d'autre part, de limiter les frottements entre le tronçon recouvert du revêtement et ladite partie environnante.

Avantageusement, pour diminuer encore plus ces frottements, la résine contient des lubrifiants secs de manière à réduire le coefficient de frottement entre le revêtement et ladite partie environnante. Ces lubrifiants sont avantageusement choisis parmi les lubrifiants suivants : graphite, bisulfure de molybdène, nitrure de bore, et sont ajoutés à la résine dans des proportions allant de quelques pour-cent à 30, voire 40% selon les lubrifiants et la taille moyenne des particules de lubrifiants secs utilisées est comprise entre 2 et 10 micromètres.

Le fait de limiter les frottements s'effectue bien évidemment au détriment du freinage du premier arbre, il garantit néanmoins une grande sécurité, les risques de rupture de l'arbre étant réduits à zéro. En effet, en limitant les frottements, on limite l'échauffement des éléments en contact et on préserve leurs propriétés mécaniques, en particulier leur résistance à la rupture et leur tenue à la fatigue.

Avantageusement, on choisit une résine qui présente une faible conductivité thermique, une bonne tenue en température, et de bonnes propriétés mécaniques. On peut citer comme exemples de résines bien adaptées : les résines époxydes, les résines bismaléimides, et les résines phénoliques. La teneur en température de la résine doit en particulier être choisie en fonction des conditions normales de fonctionnement du premier arbre, c'est-à-dire en dehors de tout contact : lorsque la température de l'arbre n'excède normalement pas 120°, on peut utiliser des résines époxydes, au-delà on préférera les résines bismaléimides et surtout les résines phénoliques.

La pièce de tissu permet de renforcer la tenue mécanique du revêtement lorsqu'il vient au contact de la partie environnante de la turbomachine. Cette pièce de tissu est préimprégnée de résine et enroulée autour du premier arbre ou au contraire déjà enroulée et ensuite imprégnée de résine. Ladite pièce peut être enroulée plusieurs fois autour de l'arbre de manière à ajuster l'épaisseur du revêtement et/ou à renforcer sa résistance mécanique.

Avantageusement, ladite pièce de tissu est formée par une tresse de fibres et est enroulée autour dudit tronçon.

Selon un autre mode de réalisation de l'invention, la pièce de tissu est formée par un manchon de fibres apte à être enfilé sur le premier arbre. Cette forme et cette aptitude particulières facilitent la mise en place de cette pièce.

Par ailleurs, le tronçon d'arbre à recouvrir est généralement situé entre deux parties d'arbre adjacentes de diamètre extérieur supérieur à celui du tronçon à recouvrir, de sorte que la mise en place d'un manchon autour de ce tronçon peut s'avérer délicate. En particulier, si l'on choisit un manchon de diamètre supérieur au plus grand diamètre de l'arbre, un écart subsiste entre le manchon et le tronçon d'arbre à recouvrir et cet écart peut poser problème pour la pose de la résine, pour la fixation du revêtement à l'arbre ou pour la bonne tenue de ce revêtement sur l'arbre.

Pour résoudre ce problème supplémentaire, avantageusement, les fibres du manchon sont tressées de sorte que ledit manchon est déformable. Ainsi, lorsqu'on enfile le manchon sur l'arbre, on l'étire radialement pour augmenter son diamètre et passer les parties de l'arbre de plus grand diamètre que celui du tronçon à recouvrir, ce qui permet de positionner facilement ce manchon au niveau de ce tronçon. Une fois correctement positionné, on étire axialement le manchon pour diminuer son diamètre et le plaquer autour dudit tronçon.

Avantageusement, pour faciliter encore sa mise en place, le manchon est élastiquement déformable. Cette élasticité peut par exemple être obtenue par le tressage des fibres et le taux de fibre utilisé. Les dimensions du manchon sont alors choisies de sorte que son diamètre au repos soit au plus égal au diamètre extérieur du tronçon d'arbre à recouvrir. Ainsi, ledit manchon vient de lui-même épouser le contour de l'arbre au niveau du tronçon à recouvrir de sorte qu'aucun écart ne subsiste entre l'arbre et le manchon.

Avantageusement, pour ajuster l'épaisseur du revêtement et/ou renforcer sa résistance mécanique, il est possible d'enfiler une pluralité de manchons sur l'arbre et de les superposer.

Selon un autre mode de réalisation de l'invention, on cherche à freiner significativement le premier arbre après que sa vitesse de rotation a suffisamment diminué suite à l'arrêt de la turbomachine (lorsque la turbomachine est un moteur d'avion, c'est le pilote de l'avion qui décide d'arrêter le moteur). En d'autres termes, lorsque le balourd vient d'apparaître et que le premier arbre tourne très vite, on cherche d'abord, comme précédemment décrit, à limiter les frottements entre ce premier arbre et la partie environnante de la turbomachine, grâce au revêtement résine/tissu. On réussit ainsi à limiter l'échauffement qui est d'autant plus important que l'intensité des frottements et la vitesse de rotation du premier arbre par rapport à ladite partie environnante sont importantes. Une fois que la vitesse de rotation de l'arbre a d'elle-même suffisamment diminué, on peut se permettre, sans risque d'échauffement trop important, de freiner significativement cet arbre en augmentant les frottements entre cet arbre et ladite partie environnante via un matériau différent du revêtement résine/tissu. Pour augmenter les frottements, on dispose entre le tronçon d'arbre et le revêtement, une première couche intermédiaire telle que le coefficient de frottement entre cette couche intermédiaire et ladite partie environnante de la turbomachine est supérieur à celui existant entre le revêtement et cette partie environnante. Le coefficient de frottement entre la couche intermédiaire et la partie environnante est choisi suffisamment important pour freiner significativement le premier arbre.

Selon un autre mode de réalisation de l'invention, il est prévu de disposer une deuxième couche intermédiaire entre le tronçon d'arbre et le revêtement ou entre le tronçon d'arbre et la première couche intermédiaire, cette deuxième couche intermédiaire étant destinée à éviter qu'un phénomène de corrosion galvanique ne s'établisse entre l'arbre et le revêtement ou entre l'arbre et la première couche intermédiaire.

L'invention sera mieux comprise et ses avantages apparaîtront clairement à la lecture de la description détaillée qui suit, de modes de réalisation représentés à titre d'exemples non-limitatifs. La description se réfère aux dessins annexés sur lesquels :
- la figure 1 est une coupe d'un turboréacteur d'avion de type connu ;
- la figure 2 est une vue en coupe selon le plan II-II de la figure 1, des deux arbres du turboréacteur de la figure 1 lorsque le premier arbre est libre d'osciller ;
- la figure 3 est une coupe d'une partie de turbomachine selon l'invention sur laquelle le revêtement recouvrant une portion du premier arbre est représenté avec des arrachements ;
- la figure 4 est une coupe analogue à celle de la figure 3, représentant un deuxième mode de réalisation de la turbomachine de l'invention ;
- la figure 5 est une coupe analogue à celle de la figure 3, représentant un troisième mode de réalisation de la turbomachine de l'invention ;

La figure 1, précédemment décrite, représente un turboréacteur d'avion double corps double flux de type bien connu. On remarquera la zone de proximité 17, dans laquelle le premier arbre 12 et le deuxième arbre 11 sont très proches. C'est dans cette zone que les deux arbres 12 et 11 vont venir au contact l'un de l'autre lorsque le palier fusible 13 va céder suite à la rupture d'une pale de la soufflante 19. La figure 2 est une vue en coupe selon le plan II-II perpendiculaire à l'axe du premier arbre et qui traverse la zone de proximité 17. Sur cette figure 2, le premier arbre 12 est libre de se mouvoir à l'intérieur du deuxième arbre 11 suite à la rupture du palier fusible 13 et vient au contact du deuxième arbre 11 dans la zone de contact 20.

Les turbomachines représentées partiellement sur les figures 3, 4 et 5 à titre d'exemples de l'invention, sont des turboréacteurs d'avion double corps double flux, analogues à celui précédemment décrit et représenté figure 1. Pour cette raison, les mêmes références numériques sont utilisées pour désigner les éléments communs à l'invention et à l'art antérieur.

Les figures 3, 4 et 5 ne représentent que la partie de turbomachine située au voisinage de la zone de proximité 17. Sur ces figures, on voit que le premier arbre 12 ou arbre basse pression, est retenu par un palier avant fusible 13 solidaire du stator 2 et susceptible de se rompre au niveau des zones de fragilisation 23. Autour du premier arbre 12 se situe le deuxième arbre 11 (ces deux arbres sont concentriques) retenu par le palier avant 14 solidaire du stator 2. Ces deux arbres sont particulièrement proches l'un de l'autre dans la zone de proximité 17. Le tronçon 30 du premier arbre 12 situé dans cette zone 17 est entouré de chaque côté par des parties du premier arbre qui présentent des diamètres extérieurs supérieurs au diamètre dudit tronçon 30.

Comme représenté sur la figure 3, le tronçon 30 est recouvert par un revêtement composite comprenant un manchon 32 de fibres 34 tressées, imprégnées de résine phénolique. La résine peut contenir des lubrifiants secs tels que le graphite, le bisulfure de molybdène, le nitrure de bore ou tout autre lubrifiant sec connu. Les fibres 34 sont en fait des torons de fibres de carbone, d'aramide ou de verre, et ont été tressées de manière à assurer une certaine élasticité du manchon 32, dans le but de faciliter la mise en place de ce dernier. Ainsi, lorsqu'on enfile le manchon sur l'arbre, il se déforme facilement en fonction des différents diamètres de l'arbre et, lorsqu'il arrive au niveau du tronçon 30, il enserre ce dernier. On imprègne ensuite ce manchon de résine.

Les fibres 34 sont orientées de manière à renforcer la résistance mécanique du revêtement. Le coefficient de frottement entre la résine phénolique utilisée pour le revêtement et la partie environnante du turboréacteur contre laquelle ce revêtement vient au contact est faible. Dans l'exemple, ladite partie environnante est formée par le deuxième arbre 11. En règle générale, lorsque le deuxième arbre 11 est réalisé en alliage de titane ledit coefficient de frottement est compris entre 0.1 et 0.6. Par exemple, pour une résine phénolique, ce coefficient de frottement est de l'ordre de 0.3. Ainsi, les frottements et donc l'échauffement sont faibles, ce qui permet de ne pas fragiliser le premier arbre 12.

L'usure du revêtement est plus ou moins importante en fonction des matériaux utilisés, de la différence entre les vitesses de rotation du premier et du deuxième arbre, et des températures dans la zone 17.

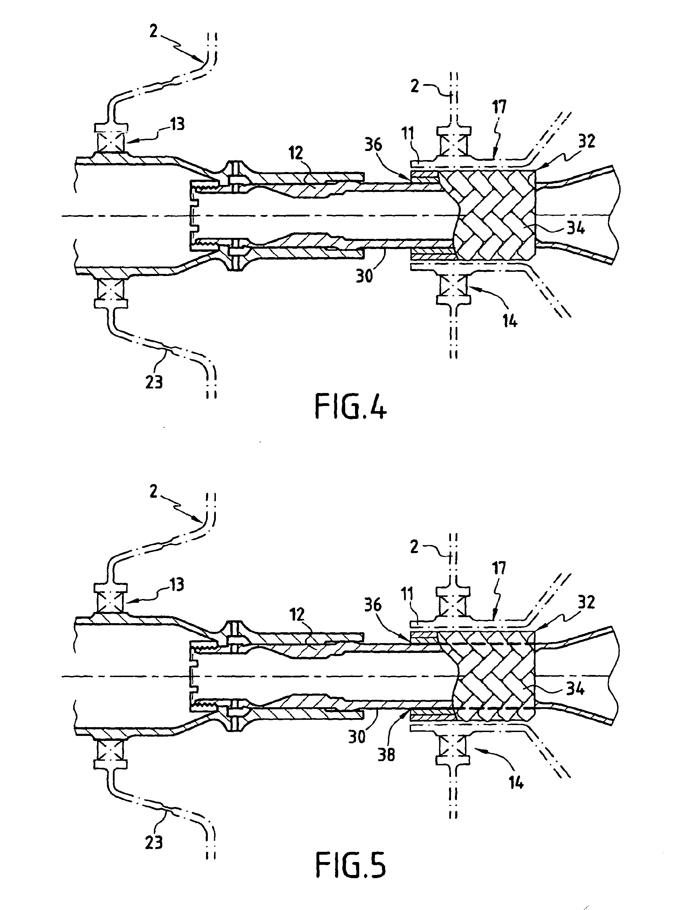

Dans le mode particulier de réalisation de l'invention représenté figure 4, on recouvre d'abord le tronçon d'arbre 30 avec une première couche intermédiaire 36, et on recouvre ensuite cette couche 36 par le revêtement composite tissu/résine. Cette couche intermédiaire 36 est réalisée par exemple en graphite. Le coefficient de frottement entre cette couche intermédiaire 36 et le deuxième arbre 11 est plus élevé que celui entre le revêtement et l'arbre 11, et est par exemple compris entre 0.6 et 0.9. La couche intermédiaire 36 entre en contact avec le deuxième arbre 11 lorsque le revêtement est usé. On choisit la résistance mécanique et l'épaisseur du revêtement telles que le contact entre la première couche intermédiaire 36 et le deuxième arbre 11 s'établisse seulement lorsque la vitesse de rotation du premier arbre 12 a suffisamment diminué. Cette vitesse étant suffisamment faible, l'échauffement est limité malgré le fort coefficient de frottement entre la couche intermédiaire 36 et le deuxième arbre 11.

Dans le mode particulier de réalisation de l'invention représenté figure 5, on a disposé entre la première couche intermédiaire 36 et le premier arbre 12 une deuxième couche intermédiaire 38. Cette couche 38 vise à éviter qu'un phénomène de corrosion galvanique ne s'établisse entre l'arbre 12 réalisé par exemple en acier maraging ou en acier haute résistance et la première couche 36. Avantageusement, la couche 38 est une couche de peinture époxyphénolique ou de peinture à pigment aluminium.

## Revendications

1. Turbomachine comprenant au moins un premier ensemble rotatif (10) avec un premier arbre (12), un stator (2) et des paliers (13, 14, 15, 16) solidaires du stator pouvant supporter ledit arbre (12), un desdits paliers (13) étant susceptible de céder lorsqu'un balourd apparaît sur l'ensemble rotatif (10), **caractérisée en ce qu**'au moins un tronçon (30) dudit arbre est recouvert par un revêtement qui comprend au moins une pièce de tissu imprégnée de résine et qui est destiné à venir au contact d'une partie environnante de la turbomachine lorsque ledit balourd apparaît.

2. Turbomachine selon la revendication 1, **caractérisée en ce que** ladite pièce de tissu est faite de fibres (34) tressées et est enroulée autour dudit tronçon (30).

3. Turbomachine selon la revendication 1, **caractérisée en ce que** ladite pièce de tissu est formée par un manchon (32) de fibres (34) apte à être enfilé sur le premier arbre (12).

4. Turbomachine selon la revendication 3, **caractérisée en ce que**, le tronçon (30) d'arbre étant situé entre deux parties d'arbre adjacentes de diamètre extérieur supérieur à celui du tronçon (30), ledit manchon (32) est déformable.

5. Turbomachine selon la revendication 4, **caractérisée en ce que** le revêtement comprend une pluralité de manchons (32) de fibres superposés.

6. Turbomachine selon l'une quelconque des revendications 2 à 5, **caractérisée en ce que** les fibres (34) sont choisies parmi les fibres de renfort suivantes : fibres de carbone, fibres d'aramide et fibres de verre.

7. Turbomachine selon l'une quelconque des revendications 1 à 6, **caractérisée en ce que** la résine est choisie parmi les résines suivantes : résines époxydes, résines bismaléimides et résines phénoliques.

8. Turbomachine selon l'une quelconque des revendications 1 à 7, **caractérisée en ce que** la résine contient des lubrifiants secs de manière à réduire le coefficient de frottement entre ledit revêtement et la partie environnante de la turbomachine.

9. Turbomachine selon l'une quelconque des revendications 1 à 8, **caractérisée en ce qu**'une première couche intermédiaire (36) est disposée entre le tronçon (30) d'arbre et le revêtement, et est telle que le coefficient de frottement entre cette couche intermédiaire et la partie environnante de la turbomachine soit supérieur à celui existant entre le revêtement et cette partie environnante.

10. Turbomachine selon l'une quelconque des revendications 1 à 9, **caractérisée en ce qu**'une deuxième couche intermédiaire (38) est disposée entre le tronçon (30) d'arbre et le revêtement ou entre le tronçon (30) d'arbre et la première couche intermédiaire (36), cette deuxième couche intermédiaire (38) étant destinée à éviter qu'un phénomène de corrosion galvanique ne s'établisse entre le premier arbre (12) et le revêtement ou la première couche intermédiaire (36).

11. Turbomachine selon l'une quelconque des revendications 1 à 10, **caractérisée en ce qu**'elle comprend un deuxième ensemble rotatif (9) avec un deuxième arbre (11), les premier et deuxième arbres étant concentriques et susceptibles de tourner à des vitesses différentes, et en ce que ladite partie environnante appartient au deuxième arbre (11) de la turbomachine.

12. Turbomachine selon l'une quelconque des revendications 1 à 10, **caractérisée en ce que** ladite partie environnante appartient au stator (2) de la turbomachine.

13. Turbomachine selon l'une quelconque des revendications 1 à 12, **caractérisée en ce que** cette turbomachine est un moteur d'avion.

## Claims

1. A turbomachine comprising at least a first rotary assembly (10) with a first shaft (12), a stator (2), and bearings (13, 14, 15, 16) secured to the stator and suitable for supporting said shaft (12), one of said bearings (13) being capable of giving way when an unbalance occurs in the rotary assembly (10), the turbomachine being **characterised in that** at least one segment (30) of said shaft is covered in a covering which comprises at least one piece of fabric impregnated with resin and which is for coming into contact with a surrounding portion of the turbomachine when said unbalance occurs.

2. A turbomachine according to claim 1, **characterised in that** said piece of fabric is made of braided fibres (34) and is wound around said segment (30).

3. A turbomachine according to claim 1, **characterised in that** said piece of fabric is formed by a sleeve (32) of fibres (34) capable of being slid onto the first shaft (12).

4. A turbomachine according to claim 3, **characterised in that**, when the shaft segment (30) is situated between two adjacent shaft portions of outside diameter greater than the outside diameter of the segment (30), said sleeve (32) is deformable.

5. A turbomachine according to claim 4, **characterised in that** the covering includes a plurality of sleeves (32) of superposed fibres.

6. A turbomachine according to any one of claims 2 to 5, **characterised in that** the fibres (34) are selected from the following reinforcement fibres: carbon fibres, aramid fibres, and glass fibres.

7. A turbomachine according to any one of claims 1 to 6, **characterised in that** the resin is selected from the following resins: epoxy resins, bismaleimide resins, and phenolic resins.

8. A turbomachine according to any one of claims 1 to 7, **characterised in that** the resin contains dry lubricants so that the coefficient of friction between said covering and the surrounding portion of the turbomachine is reduced.

9. A turbomachine according to any one of claims 1 to 8, **characterised in that** a first intermediate layer (36) is disposed between the shaft segment (30) and the covering, and is such that the coefficient of friction between said intermediate layer and the surrounding portion of the turbomachine is greater than the coefficient of friction existing between the covering and said surrounding portion.

10. A turbomachine according to any one of claims 1 to 9, **characterised in that** a second intermediate layer (38) is disposed between the shaft segment (30) and the covering or between the shaft segment (30) and the first intermediate layer (36), said second intermediate layer (38) serving to prevent a galvanic-corrosion phenomenon from becoming established between the first shaft (12) and the covering or the first intermediate layer (36).

11. A turbomachine according to any one of claims 1 to 10, **characterised in that** it comprises a second rotary assembly (9) with a second shaft (11), the first and second shafts being coaxial and capable of rotating at different speeds, and **in that** said surrounding portion belongs to the second shaft (11) of the turbomachine.

12. A turbomachine according to any one of claims 1 to 10, **characterised in that** said surrounding portion belongs to the stator (2) of the turbomachine.

13. A turbomachine according to any one of claims 1 to 12, **characterised in that** the turbomachine is an aeroengine.

## Patentansprüche

1. Turbomaschine umfassend wenigstens eine erste drehbare Anordnung (10) mit einer ersten Welle (12), einem Stator (2) und Lagern (13, 14, 15, 16), die mit dem Stator fest verbunden sind und die in der Lage sind, die Welle (12) zu tragen, wobei ein Lager (13) geeignet ist, nachzugeben, wenn eine Unwucht an der drehbaren Anordnung auftritt, **dadurch gekennzeichnet, daß** wenigstens ein Abschnitt (30) der Welle mit einem Überzug bedeckt ist, der wenigstens ein Stück Gewebe umfaßt, das mit Harz imprägniert ist und das dazu bestimmt ist, mit einem die Turbomaschine umgebenden Abschnitt in Kontakt zu kommen, wenn die Unwucht auftritt.

2. Turbomaschine nach Anspruch 1, **dadurch gekennzeichnet, daß** das Stück Gewebe aus verflochtenen Fasern (34) besteht und um den Abschnitt (30) gewickelt ist.

3. Turbomaschine nach Anspruch 1, **dadurch gekennzeichnet, daß** das Stück Gewebe mittels eines Manchons (32) aus Fasern (34) gebildet ist, der geeignet ist, über die erste Welle (12) gestreift zu werden.

4. Turbomaschine nach Anspruch 3, **dadurch gekennzeichnet, daß**, da der Abschnitt (30) der Welle zwischen zwei hintereinanderliegenden Wellenabschnitten mit einem größeren Außendurchmesser als jenem des Abschnitts (30) liegt, der Manchon (32) verformbar ist.

5. Turbomaschine nach Anspruch 4, **dadurch gekennzeichnet, daß** der Überzug eine Mehrzahl von übergelagerten Manchons (32) von Fasern umfaßt.

6. Turbomaschine nach einem der Ansprüche 2 bis 5, **dadurch gekennzeichnet, daß** die Fasern (34) unter den folgenden Verstärkungsfasern ausgewählt sind: Kohlefasern, Aramidfasern und Glasfasern.

7. Turbomaschine nach einem der Ansprüche 1 bis 6, **dadurch gekennzeichnet, daß** das Harz unter den folgenden Harzen ausgewählt ist: Epoxydharzen, Bismaleimidharzen und Phenolharzen.

8. Turbomaschine nach einem der Ansprüche 1 bis 7, **dadurch gekennzeichnet, daß** das Harz trockene Gleitmittel derart umfaßt, daß der Reibungskoeffizient zwischen der Überzug und dem die Turbomaschine umgebenden Abschnitt verringert wird.

9. Turbomaschine nach einem der Ansprüche 1 bis 8, **dadurch gekennzeichnet, daß** eine erste Zwischenschicht (36) zwischen dem Wellenabschnitt (30) und dem Überzug angeordnet ist, und zwar derart, daß der Reibungskoeffizient zwischen dieser Zwischenschicht und dem die Turbomaschine umgebenden Abschnitt größer ist als der zwischen dem Überzug und dem umliegenden Abschnitt.

10. Turbomaschine nach einem der Ansprüche 1 bis 9, **dadurch gekennzeichnet, daß** eine zweite Zwischenschicht (38) zwischen dem Abschnitt (30) der Welle und dem Überzug oder zwischen dem Abschnitt (30) der Welle und der ersten Zwischenschicht (36) angeordnet ist, wobei diese zweite Zwischenschicht (38) dazu bestimmt ist, zu vermeiden, daß ein Phänomen galvanischer Korrosion zwischen der ersten Welle (12) und dem Überzug oder der ersten Zwischenschicht (36) auftritt.

11. Turbomaschine nach einem der Ansprüche 1 bis 10, **dadurch gekennzeichnet, daß** sie eine zweite drehbare Anordnung (9) mit einer zweiten Welle (11) umfaßt, wobei die erste und zweiten Welle konzentrisch und in der Lage sind, sich mit unterschiedlichen Geschwindigkeiten zu drehen und, daß der umgebende Abschnitt zur zweiten Welle (11) der Turbomaschine gehört.

12. Turbomaschine nach einem der Ansprüche 1 bis 10, **dadurch gekennzeichnet, daß** der umgebende Abschnitt zum Stator (2) der Turbomaschine gehört.

13. Turbomaschine nach einem der Ansprüche 1 bis 12, **dadurch gekennzeichnet, daß** diese Turbomaschine ein Flugzeugmotor ist.
